# EUROPEAN PATENT APPLICATION

(11) **EP 4 531 392 A1**
(43) Date of publication of application: **02.04.2025**
(21) Application number: 24173903.6
(22) Date of filing: 02.05.2024
(51) Int. Cl.: H04N 7/14, H04N 21/41, H04N 21/4363, H04W 76/10

(54) **WIRELESS MULTI -STREAM BIDIRECTIONAL VIDEO PROCESSING DEVICE**

(30) Priority: 28.09.2023 TW 112137443
(71) Applicant: Magic Control Technology Corporation, New Taipei City 236658 (TW)
(72) Inventor: LIU, Pei-Chung, 235 New Taipei City (TW)
(74) Representative: Kador & Partner Part mbB

(57) **Abstract**

The present invention is related to a wireless multi-stream bidirectional video processing device for connecting with a wireless device and a host device, including: a wireless communication unit for wirelessly connecting with the wireless device to receive video from the wireless device; and an image processing unit for transmitting a connection request signal to the wireless device through the wireless communication unit, so that the wireless device returns a connection permission signal and the video according to the connection request signal, and performing processing on the video to become output videos, wherein the processing includes video display mode, and the image processing unit processes the video according to a selected video display mode, and the wireless multi-stream bidirectional video processing device provides endpoints for the host device according to the quantity of the output videos, so as to transmit the output videos to the host device.

## Description

### PRIOR ART

In video conferencing, using wireless connection allows users to set up and adjust the position of the camera device more conveniently and freely.

However, in a video conference, it is usually necessary to display videos from multiple camera devices simultaneously or to perform simple processing on the videos of the camera devices, so as to facilitate the conference.

Therefore, it is necessary to provide a method that can efficiently process the videos of multiple camera devices simultaneously, so that the videos of each camera device can be clearly displayed simultaneously.

In addition, after using a computer to receive videos from multiple camera devices, there is often a need to display the images on a large screen or television. The use of wireless connections allows users to set up and adjust the location of the computer more conveniently and freely.

Therefore, there is a need to provide a wireless multi-stream bidirectional video processing device that has the bidirectional video processing function of wirelessly transmitting videos from multiple camera devices and wirelessly transmitting computer-processed images to wireless devices (for example, wireless devices with large screens or wireless devices connected to large screens).

### BACKGROUND OF THE INVENTION

The present invention relates to a wireless multi-stream bidirectional video processing device, particularly a wireless multi-stream bidirectional video processing device wirelessly for bidirectional data transmission.

### SUMMARY OF THE INVENTION

In order to achieve the purpose of effectively solving the above problems, the present invention proposes a wireless multi-stream bidirectional video processing device for connecting with a plurality of wireless devices and a host device, the wireless multi-stream bidirectional video processing device comprising: a wireless communication unit for wirelessly connecting with the wireless devices to receive at least one video from the wireless devices; an image processing unit for transmitting a connection request signal to the wireless devices through the wireless communication unit, so that the wireless devices returns a connection permission signal and the at least one video according to the connection request signal, and performing processing on the at least one video to become a plurality of output videos; and a mode control unit for transmitting a format request signal to the wireless devices through the wireless communication unit according to at least one display video received from the host device, so that the wireless devices return a format reply signal according to the format request signal, adjusting the at least one display video according to the format reply signal to become at least one display information, and transmitting the at least one display information to the wireless devices through the wireless communication unit, wherein, the wireless multi-stream bidirectional video processing device provides a plurality of endpoints for the host device according to a quantity of the output videos and the at least one display video, so as to transmit the output videos to the host device and receive the at least one display video from the host device.

Preferably, the host device generates the at least one display video according to the output videos.

Preferably, the wireless communication unit and the wireless devices use a Wi-Fi protocol for wireless connection.

Preferably, the image processing unit includes a video processor, a neural network processor, a memory, and a storage unit, and the video processor and the neural network processor use a program stored in the storage unit to perform the processing, and the memory is used to store the at least one video and the output videos.

Preferably, the wireless multi-stream bidirectional video processing device further comprising: a USB control unit for receiving the output videos, reporting an endpoint information to the host device according to the output videos, and receiving the at least one display video, so as to provide the endpoints for the host device according to the quantity of the output videos and the at least one display video; and a connection port unit for receiving the output videos from the USB control unit to transmit the output videos to the host device, and for receiving the at least one display video from the host device to transmit the at least one display video to the USB control unit.

Preferably, the mode control unit includes: a video conversion unit for adjusting the at least one display video according to the format reply signal, the mode control unit receives the at least one display video from the USB control unit, and the adjustment includes adjusting a format of the at least one display video and compressing the adjusted format of the at least one display video into the at least one display information, so as to facilitate wireless transmission.

Preferably, the processing of the at least one video includes at least one video display mode, the image processing unit processes the at least one video according to the video display mode that is selected, and the video display mode includes picture-in-picture, side-by-side picture, picture cropping, picture overlapping, picture zoom-in and zoom-out, and original picture.

Preferably, the processing further includes a format processing to convert a format of the received at least one video into a format that complies with a USB video class, so as to allow the connection port unit to transmit the output videos.

Preferably, the processing further includes a resolution processing to convert a resolution of the received at least one video into a resolution consistent with the host device.

Preferably, the image processing unit processes the at least one display video before the mode control unit adjust the at least one display video.

Preferably, the processing of the at least one display video includes the video display mode, the image processing unit processes the at least one display video according to the video display mode that is selected.

In order for those familiar with the art to understand the purpose, characteristics and effects of the present invention, the present invention is described in detail as follows through the following specific embodiments and in conjunction with the attached drawings.

### BRIEF DESCRIPTION OF DRAWINGS

FIG. 1 is a schematic diagram of a conventional wireless video transmission device.
FIG. 2 is a schematic diagram of a wireless multi-stream bidirectional video processing device according to the present invention.
FIG. 3 is a block diagram of a wireless multi-stream bidirectional video processing device according to an embodiment of the present invention.
FIG. 4 is a block diagram of a wireless multi-stream bidirectional video processing device transmitting signals from a wireless device to a host device according to an embodiment of the present invention; and
FIG. 5 is a block diagram of a wireless multi-stream bidirectional video processing device transmitting signals from a host device to a wireless device according to an embodiment of the present invention.

### DETAILED DESCRIPTION OF THE INVENTION

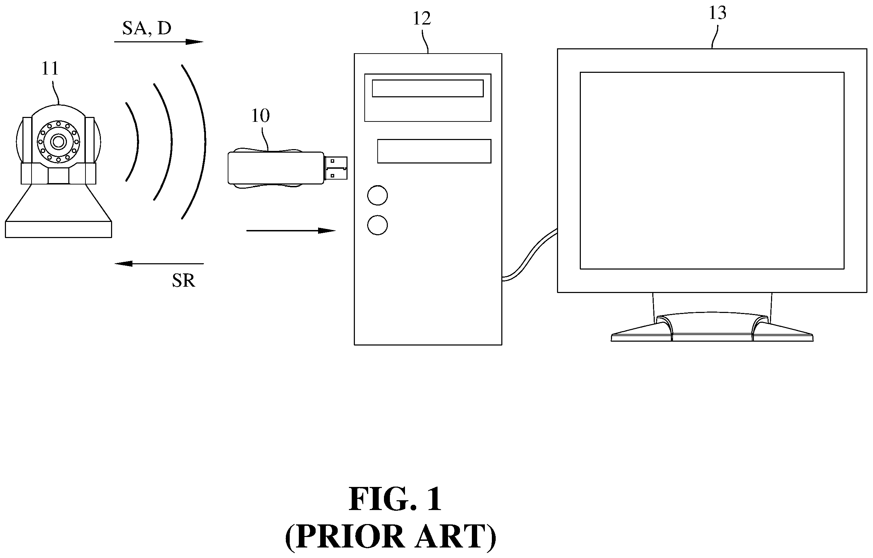

Please refer to FIG. 1, which is a schematic diagram of a conventional wireless video transmission device. A conventional video transmission system includes a wireless video transmission device 10, a wireless device 11, a host device 12, and a display device 13. The wireless device 11 is a wireless device configured to return a connection permission signal SA and a video D according to a connection request signal SR transmitted by the wireless video transmission device 10. In addition to the wireless device 11, the source of the video D can also be other sources on the Internet, such as a video player, etc., depending on actual needs. That is, the wireless device 11 may be a network camera device or a camera device equipped with a wireless communication unit. If the camera device is a network camera device, the wireless video transmission device 10 is connected to the Internet through a wireless communication unit and then connected thereto, unlike the wireless device 11 with a wireless communication unit in FIG. 1, which can be directly connected via Wi-Fi.

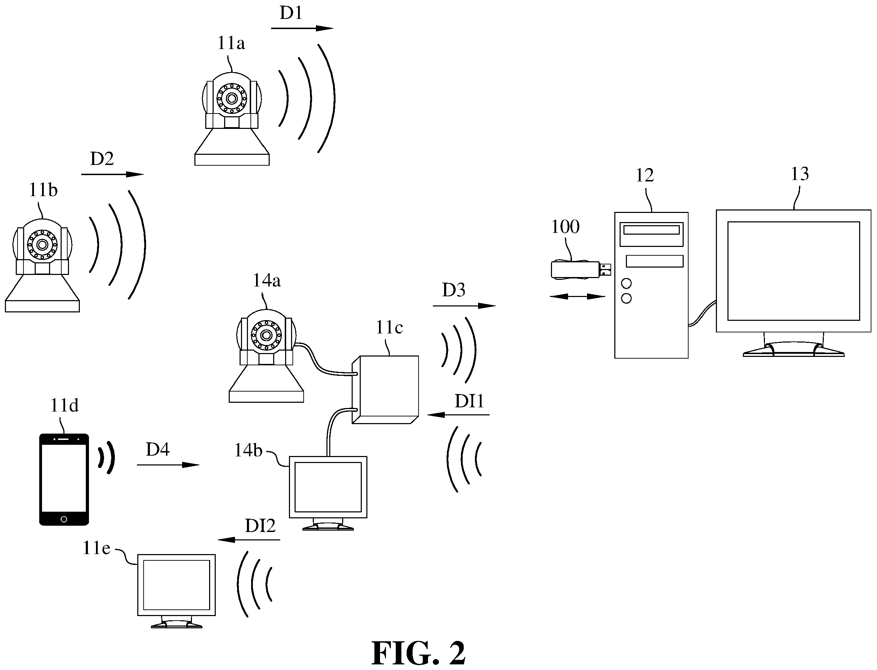

Please refer to FIG. 2, which is a schematic diagram of a wireless multi-stream bidirectional video processing device 100 according to the present invention. The wireless multi-stream bidirectional video processing device 100 of the present invention may be wirelessly connected to a plurality of wireless devices, such as wireless devices 11a to 11e, to receive videos D1 to D4 from the wireless devices 11a to 11d among the wireless devices 11a to 11e. Here, it is preferable to use a Wi-Fi protocol for connection, but the present invention is not limited thereto. Wireless devices may include any device with a wireless connection function, including but not limited to panoramic cameras, cameras with pan/tilt/zoom (PTZ) functions, mobile phones and other devices with camera functions. In addition, the wireless device itself may not have a camera function, but may be connected to a processing or transmission device of a camera device 14a that has a camera function. For example, a wireless device 11c may receive videos transmitted by multiple camera devices with camera functions, process the videos (for example, wireless device 11c), and wirelessly transmit the processed videos to the wireless multi-stream bidirectional video processing device 100 of the present invention.

Therefore, it can be understood that the videos D1 to D4 received by the wireless multi-stream bidirectional video processing device 100 of the present invention may include but are not limited to any processed or unprocessed videos. For example, the processed video may include video processed by a wireless device with video processing capabilities. This processing includes, but is not limited to, picture-in-picture, picture-by-picture, picture cropping, picture overlapping, picture zooming in and out, and other processing. In addition, the processed videos may also have various resolutions, specifications, ratios, etc. In addition, for example, the unprocessed videos may include, but are not limited to, videos with various resolutions, specifications, and proportions captured by various different camera devices. It can be understood that the present invention does not limit the quantity of received videos, and the wireless multi-stream bidirectional video processing device 100 may wirelessly receive one or more videos.

In addition, the wireless multi-stream bidirectional video processing device 100 of the present invention has a bidirectional transmission function. That is, it can transmit the display information DI1 and DI2 to the wireless device 11c and the wireless device 11e. It can be understood that the wireless multi-stream bidirectional video processing device 100 can transmit display information to any device with a wireless connection function and can directly display the display information, such as the wireless device 11e. The wireless device 11e includes but is not limited to smart TVs, smart projectors, mobile phones, tablets, etc. In addition, the wireless multi-stream bidirectional video processing device 100 can transmit the display information to any device with a wireless connection function and can indirectly display the display information, for example, the wireless device 11c connected to the display device 14b.

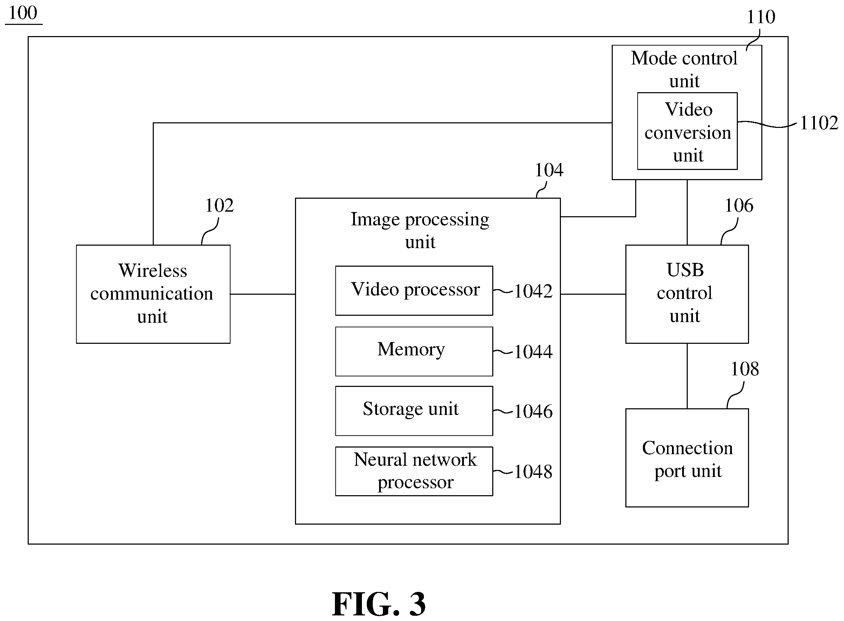

Please refer to FIG. 3, which is a block diagram of a wireless multi-stream bidirectional video processing device according to an embodiment of the present invention. Please refer to FIGs. 2 and 3. In this embodiment, the wireless multi-stream bidirectional video processing device 100 includes: a wireless communication unit 102 for wirelessly connecting to the wireless devices 11a to 11e to receive the videos D1 to D4 from the wireless devices 11a to 11d and to transmit the display information DI1 and DI2 to the wireless devices 11c and 11e; an image processing unit 104 for processing the videos D1 to D4 to become output videos; a USB control unit 106 for receiving the output videos, and according to the quantity of the output videos and display videos received from the host device 12, providing a plurality of endpoints for the host device 12; a connection port unit 108 for receiving the output videos from the USB control unit 106, so as to transmit the output videos to the host device 12; and a mode control unit 110 for receiving the display videos from the host device 12 and converting the display videos into the display information DI1 and DI2. Specifically, the wireless multi-stream bidirectional video processing device 100 is connected to the host device 12 through the connection port unit 108, and the supported format of the connection port unit 108 may be USB 2.0, USB 3.0, USB Type-C, multi-cable connection port, or customized ports, but not limited thereto.

In addition, the image processing unit 104 includes: a video processor 1042; a memory 1044; a storage unit 1046; and a neural network processor 1048, which uses an artificial intelligence engine to adaptively assist the image processing of the image processing unit 104. The video processor 1042 and the neural network processor 1048 use a program stored in the storage unit 1046 to execute the video display mode, and the memory 1044 is used to store the videos D1 to D4 and the output videos. Specifically, the memory 1044 and the storage unit 1046 may include any form of memory, including but not limited to RAM. It can be understood that the display video from the host device 12 may be first processed by the image processing unit 104 and then transmitted to the mode control unit 110.

In addition, the mode control unit 110 includes a video conversion unit 1102 for converting and compressing the display videos.

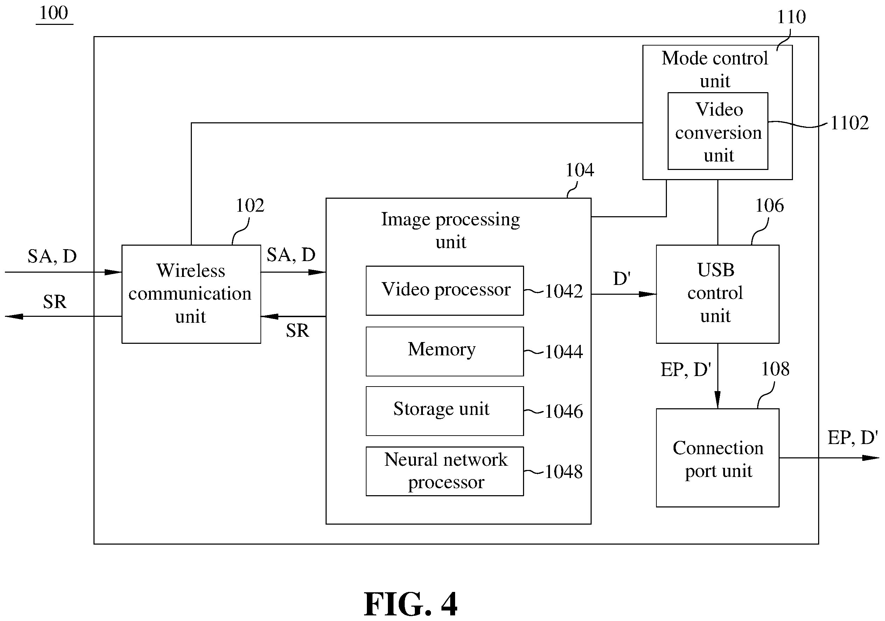

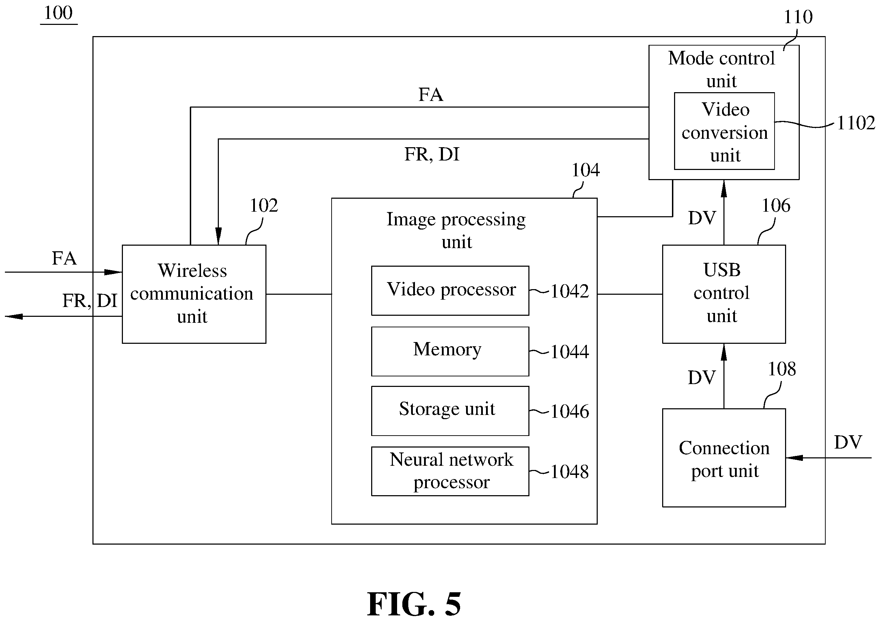

Referring to FIGs. 4 and 5, the bidirectional transmission of the present invention is further described below. It can be understood that the wireless multi-stream bidirectional video processing device 100 of the present invention can be used for bidirectional transmission of signals. One of the two directions is the direction in which the wireless device 11 transmits signals to the host device 12, and the other direction is the direction in which the host device 12 transmits signals to the wireless device 11.

FIG. 4 is a block diagram of a wireless multi-stream bidirectional video processing device 100 transmitting signals from the wireless device 11 to the host device 12 according to an embodiment of the present invention. Referring to FIG. 4, when the wireless device 11 transmits a signal to the host device 12, the following components of the wireless multi-stream bidirectional video processing device 100 perform the following functions: the wireless communication unit 102 is used to receive the video D from the wireless device 11; the image processing unit 104 transmits the connection request signal SR to the wireless device 11 through the wireless communication unit 102, so that the wireless device 11 returns the connection permission signal SA and the video D according to the connection request signal SR, and processes the video D to become the output video D'; the USB control unit 106 receives the output video D', reports the endpoint information EP to the host device 12 according to the output video D', and provides a plurality of endpoints to the host device 12 according to the quantity of output videos D'; and the connection port unit 108 receives the output video D' from the USB control unit 106 to transmit the output video D' to the host device 12.

Specifically, when the wireless multi-stream bidirectional video processing device 100 is coupled to the wireless devices 11a to 11e through the wireless communication unit 102, the wireless multi-stream bidirectional video processing device 100 sends the connection request signal SR to the wireless devices 11a to 11e, and the wireless devices 11a to 11d among the wireless devices 11a to 11e identify the wireless multi-stream bidirectional video processing device 100 according to the connection request signal SR to return the connection permission signal SA and the video D.

It can be understood that processing of the image processing unit 104 includes a video display mode. That is, the image processing unit 104 processes the video D according to the video display mode that is selected to transmit the output video D' to the host device 12. It can be understood that the image processing unit 104 may also not perform processing on the video D according to the selected video display mode, and directly output the video D as the output video D', so to be transmitted to the host device 12.

Specifically, the image processing unit 104 processes the videos D1 to D4 according to the selected video display mode. The video display mode includes, but is not limited to, picture-in-picture, side-by-side, cropping, overlapping, zooming in and out, original picture, etc. It can be understood that when the video display mode that is selected is the original picture, the image processing unit 104 may not process the video D and directly output the video D as the output video D'. In addition, the video display mode may also include processing the incoming video using computer vision algorithms through the neural network processor 1048, such as edge detection, image segmentation, and feature extraction. Also, use person detection algorithms to identify and locate people in the video, such as attendees' faces, human body shapes, or other objects of interest. In addition, a person detection algorithm is used to identify and locate people in the screen or image. Also, once a person is identified, AI algorithms use motion tracking technology to track the person's movement over time. In addition, the image processing unit 104 may also process the videos D1 to D4 in different video display modes. For example, the video D1 is processed in the first video display mode, and the videos D2-D4 are processed in the second video display mode. However, the present invention is not limited thereto.

For example, assuming that the video D1 is a video captured by a panoramic camera and the captured video includes five people, the image processing unit 104 identifies the five people respectively according to the selected video display mode, and output five cropped videos tracking the five characters and the original panoramic video. Therefore, the image processing unit 104 processes the video D1 and outputs six output videos D'. Therefore, according to the selected video display mode, the image processing unit 104 outputs multiple output videos D' in a multi-stream manner. Or, for example, according to another selected video display mode, the videos D1 to D4 may all be displayed as one video in the side-by-side mode, so the image processing unit 104 may output one output video D'.

Accordingly, the USB control unit 106 receives at least one output video D', so as to report the endpoint information EP to the host device 12 based on the at least one output video D'. For example, assuming that the image processing unit 104 outputs six output videos D', the endpoint information EP reported by the USB control unit 106 is six endpoints, so that the host device 12 is prepares the channels to transmit six videos, and so on.

In addition, the processing further includes format processing and resolution processing. When the image processing unit 104 receives the video D and processes the video D to become the output video D', the image processing unit 104 simultaneously convert the video D into a format that complies with the USB Video Class (UVC), so that the connection port unit 108 is capable of transmitting the output video D'. For example, if the format of the video D of the wireless device 11 is a non-UVC format, such as a Real Time Streaming Protocol (RTSP) stream, the image processing unit 104 performs format processing to convert the format into UVC format. Also, for example, if the format of the video D of the wireless device 11 is the UVC format, generally the most common technology is the Motion Joint Photographic Experts Group (MJPEG) format, the image processing unit 104 does not perform format processing. In addition, in other embodiments, the host device 12 and the display device 13 may be an integrated device with a display function, such as a mobile phone, a tablet, a notebook computer, or any portable device.

In addition, the processing further includes resolution processing. If the video D output by the wireless device 11 to the wireless multi-stream bidirectional video processing device 100 has a first resolution (for example, 1080p), and the resolution of the host device 12 is set to a second resolution (for example, 720p). The image processing unit 104 performs resolution processing, such as scaling, on the video D to adjust the output video D' to the second resolution. It should be noted that the second resolution may be larger than the first resolution depending on actual requirements. For example, the second resolution is 4Kp, which is larger than the first resolution of 1080p.

Compared with the previous technology, since the UVC driver is a native (generic) driver that is preinstalled in most operating systems, the wireless multi-stream bidirectional video processing device 100 and the wireless device 11 do not need to additionally install, execute or configure a specific driver to receive the connected video on the host device 12, which can avoid driver compatibility issues, reduce the difficulty of use and improve convenience. In actual application, users may use flexibly transmit content from various devices and media equipment through any wireless device, and the wireless multi-stream bidirectional video processing device 100 may automatically adjust the resolution settings through video processing according to the resolution of the host device 12, and configured the format of the display video as needed.

FIG. 5 is a block diagram of a wireless multi-stream bidirectional video processing device 100 transmitting signals from the host device 12 to the wireless device 11 according to an embodiment of the present invention. Referring to FIG. 5, when the host device 12 transmits a signal to the wireless device 11, the following components of the wireless multi-stream bidirectional video processing device 100 perform the following functions: the connection port unit 108 receives the display video DV from the host device 12 to display the DV. The video DV is transmitted to the USB control unit 106; the USB control unit 106 receives the display video DV from the connection port unit 108 to transmit the display video DV to the mode control unit 110, and according to the quantity of the output video D' and the display video DV, is The host device 12 provides an endpoint; the mode control unit 110 transmits the format request signal FR to the wireless device 11 through the wireless communication unit 102 according to the display video DV received by the USB control unit 106, so that the wireless device 11 returns the format request signal FR according to the format request signal FR. format reply signal FA, and adjust the display video DV according to the format reply signal FA to become display information DI, and transmit the display information DI to the wireless device 11 through the wireless communication unit 102; and the wireless communication unit 102 is used in the slave mode The control unit 110 receives the format request signal FR, wirelessly transmits the format request signal FR to the wireless device 11, receives the format reply signal FA from the wireless device 11, transmits the format reply signal FA to the mode control unit 110, and receives a display from the mode control unit 110 information DI, and transmit the display information DI to the wireless device 11 .

It can be understood that the display video DV is any video set by the user. For example, the user generates a display video DV in the host device 12 using the output video D' received as shown in FIG. 4.

Here, the manner in which the USB control unit 106 provides endpoints is specifically described. The USB control unit 106 provides endpoints for the host device 12 according to the quantity of output videos D' and display videos DV. For example, when the quantity of output videos D' received by the USB control unit 106 is N output videos D' (N is any positive integer) and the host device 12 does not output any display video DV, the USB control unit 106 provides N endpoints for the host device 12, so that host device 12 can receive N output videos D' simultaneously. When the USB control unit 106 does not receive the output video D' and the host device 12 outputs M display videos DV (M is any positive integer), the USB control unit 106 provides M endpoints for the host device 12 so that the host device 12 transmits M display videos DV at the same time. When the quantity of output videos D' received by the USB control unit 106 is N output videos D' and the host device 12 outputs M display videos DV, the USB control unit 106 provides N+M endpoints for the host device 12, so that the host device 12 would be able to receive N output videos D' and transmit M display videos DV simultaneously.

Specifically, the mode control unit 110 transmits the format request signal FR to the wireless devices 11a to 11e through the wireless communication unit 102 according to the display video DV received by the USB control unit 106, so that the wireless devices 11c and 11e among the wireless devices 11c and 11e return the format reply signal FA according to the format request signal FR, and the video conversion unit 1102 in the mode control unit 110 adjusts the display video DV according to the format reply signal FA, so as to become the display information DI. Finally, the mode control unit 110 transmits the display information DI to the wireless device 11 through the wireless communication unit 102. The format reply signal FA may include, but is not limited to, display format information, compression format information, transmission format information, etc. of the display device 14b or the wireless device 11e.

Accordingly, the adjustment includes adjusting the format of the displayed video DV to the format of the target display device and compressing the adjusted format of the displayed video DV into the at least one display information DI, so as to facilitate wireless transmission.

It can be understood that, in alternative embodiments of the present invention, the display video from the host device 12 can also be firstly transmitted from the USB control unit 106 to the image processing unit 104, and then processed by the image processing unit 104, and then transmitted to the mode control unit 110. The processing of the at least one display video by the image processing unit 104 includes the video display mode, and the image processing unit 104 processes the at least one display video according to the selected video display mode. For example, the image processing unit 104 adds the temporarily stored cropped video of a person to at least one display video, and transmits the processed at least one display video to the mode control unit 110 , and finally transmits the processed at least one display video to the wireless device 11 via the wireless communication unit 102 .

Accordingly, the wireless multi-stream bidirectional video processing device of the present invention has the function of bidirectional signal transmission. Through endpoint settings, the wireless multi-stream bidirectional video processing device can more conveniently receive videos from multiple wireless devices and transmit videos from the host device to a wireless device with the function of directly or indirectly playing and displaying information, simultaneously.

The present invention is not limited to the above-described embodiments. It is obvious to those skilled in the art that various modifications and changes may be made to the present invention without departing from the spirit or scope of the present invention.

Therefore, the present invention is intended to cover modifications and changes made to the present invention or falling within the scope of the appended patent applications and their equivalents.

## Claims

1. A wireless multi-stream bidirectional video processing device for connecting with a plurality of wireless devices and a host device, the wireless multi-stream bidirectional video processing device comprising:
a wireless communication unit for wirelessly connecting with the wireless devices to receive at least one video from the wireless devices; and
an image processing unit for transmitting a connection request signal to the wireless devices through the wireless communication unit, so that the wireless devices returns a connection permission signal and the at least one video according to the connection request signal, and performing processing on the at least one video to become a plurality of output videos; and
a mode control unit for transmitting a format request signal to the wireless devices through the wireless communication unit according to at least one display video received from the host device, so that the wireless devices return a format reply signal according to the format request signal, adjusting the at least one display video according to the format reply signal to become at least one display information, and transmitting the at least one display information to the wireless devices through the wireless communication unit,
wherein, the wireless multi-stream bidirectional video processing device provides a plurality of endpoints for the host device according to a quantity of the output videos and the at least one display video, so as to transmit the output videos to the host device and receive the at least one display video from the host device.

2. The wireless multi-stream bidirectional video processing device according to claim 1, wherein the host device generates the at least one display video according to the output videos.

3. The wireless multi-stream bidirectional video processing device according to claim 1, wherein the wireless communication unit and the wireless devices use a Wi-Fi protocol for wireless connection.

4. The wireless multi-stream bidirectional video processing device according to claim 1,
wherein, the image processing unit includes a video processor, a neural network processor, a memory, and a storage unit, and
wherein, the video processor and the neural network processor use a program stored in the storage unit to perform the processing, and the memory is used to store the at least one video and the output videos.

5. The wireless multi-stream bidirectional video processing device according to claim 1, further comprising:
a USB control unit for receiving the output videos, reporting an endpoint information to the host device according to the output videos, and receiving the at least one display video, so as to provide the endpoints for the host device according to the quantity of the output videos and the at least one display video; and
a connection port unit for receiving the output videos from the USB control unit to transmit the output videos to the host device, and for receiving the at least one display video from the host device to transmit the at least one display video to the USB control unit.

6. The wireless multi-stream bidirectional video processing device according to claim 5, wherein, the mode control unit includes:
a video conversion unit for adjusting the at least one display video according to the format reply signal,
wherein, the mode control unit receives the at least one display video from the USB control unit, and
wherein, the adjustment includes adjusting a format of the at least one display video and compressing the adjusted format of the at least one display video into the at least one display information, so as to facilitate wireless transmission.

7. The wireless multi-stream bidirectional video processing device according to claim 1,
wherein, the processing of the at least one video includes at least one video display mode, the image processing unit processes the at least one video according to the video display mode that is selected, and
wherein, the video display mode includes picture-in-picture, side-by-side picture, picture cropping, picture overlapping, picture zoom-in and zoom-out, and original picture.

8. The wireless multi-stream bidirectional video processing device according to claim 7, wherein the processing further includes a format processing to convert a format of the received at least one video into a format that complies with a USB video class, so as to allow the connection port unit to transmit the output videos.

9. The wireless multi-stream bidirectional video processing device according to claim 7, wherein the processing further includes a resolution processing to convert a resolution of the received at least one video into a resolution consistent with the host device.

10. The wireless multi-stream bidirectional video processing device according to claim 7, wherein, the image processing unit processes the at least one display video before the mode control unit adjust the at least one display video.

11. The wireless multi-stream bidirectional video processing device according to claim 10, wherein, the processing of the at least one display video includes the video display mode, the image processing unit processes the at least one display video according to the video display mode that is selected.
